# EUROPÄISCHE PATENTSCHRIFT

(11) **EP 1 808 063 B1**
(45) Veröffentlichungstag und Bekanntmachung des Hinweises auf die Patenterteilung: **09.09.2009**
(21) Anmeldenummer: 07100311.5
(22) Anmeldetag: 10.01.2007
(51) Int. Cl.: A01D 41/14, A01D 43/08

(54) **Selbstfahrende landwirtschaftliche Erntemaschine mit einem um eine vertikale Achse schwenkbaren Erntevorsatz**
Self-propelled agricultural harvester with a header pivotal about a vertical axis
Moissonneuse agricole automotrice avec une tête de récolte pivotable autour d'un axe vertical

(30) Priorität: 16.01.2006 DE 102006002053
(43) Veröffentlichungstag der Anmeldung: 18.07.2007
(73) Patentinhaber: Deere & Company, Moline, IL 61265-8098 (US)
(72) Erfinder: Janning, Thomas, 48607, Ochtrup (DE)
(74) Vertreter: Holst, Sönke

(56) Entgegenhaltungen:
- EP-A- 1 305 995
- EP-A- 1 733 606
- EP-A1- 0 092 805
- FR-A- 2 192 443

## Beschreibung

Die Erfindung betrifft eine selbstfahrende landwirtschaftliche Erntemaschine, die in einer normalen Vorwärtsfahrtrichtung vortreibbar ist und ein Fahrgestell aufweist, das eine innerhalb des Fahrgestells angeordnete Erntegutbearbeitungseinrichtung und einen an der Vorderseite des Fahrgestells angeordneten Einzugsförderer umfasst, an dessen Vorderseite eine Erntevorsatzaufnahmeeinrichtung angeordnet ist, an der ein Erntevorsatz zur Aufnahme von Erntegut lösbar anbringbar oder angebracht ist, welches im Erntebetrieb durch den Einzugsförderer der Erntegutbearbeitungseinrichtung zuführbar ist.

### Stand der Technik

Viele Typen selbstfahrender landwirtschaftlicher Erntemaschinen umfassen ein Fahrgestell, das mit angetriebenen vorderen Rädern und lenkbaren hinteren Rädern ausgestattet ist. Beispiele sind Mähdrescher und Feldhäcksler. An der Vorderseite der Fahrgestelle der Erntemaschine ist ein Erntevorsatz zur Aufnahme von auf einem Feld liegenden oder stehenden Erntegut angebracht, der das Erntegut im Erntebetrieb an einen mit dem Fahrgestell verbundenen Einzugsförderer übergibt, welcher bei Mähdreschern als Schrägförderer und bei Feldhäckslern als Einzugsgehäuse bezeichnet wird. Der Einzugsförderer verbringt das Erntegut in das Innere des Fahrgestells, in dem Erntegutbearbeitungseinrichtungen, wie Dresch-, Trenn- und Reinigungseinrichtungen bei Mähdreschern und Häckselaggregate bei Feldhäckslern, angeordnet sind.

Die Erntevorsätze sind in vielen Fällen abnehmbar, aber ansonsten starr am Einzugsförderer angebracht. Zur Anpassung an die Bodenkontur ist der Einzugsförderer üblicherweise gegenüber dem Fahrgestell der Erntemaschine mittels eines Aktors um eine horizontal und quer zur Vorwärtsrichtung verlaufende Achse schwenkbar befestigt. Eine geeignete Steuerung erfasst die Höhe des Erntevorsatzes über dem Boden mittels eines Sensors und steuert den Aktor derart an, dass eine gewünschte Höhe oder ein gewünschter Auflagedruck des Erntevorsatzes auf dem Boden erreicht wird. Diese Steuerung kann den Erntevorsatz zusätzlich gegenüber dem Einzugsförderer um eine sich horizontal und in Vorwärtsrichtung der Erntemaschine erstreckende Achse verschwenken (EP 1 269 823 A), was beispielsweise bei Hangmähdreschern mit zur selbsttätigen horizontalen Ausrichtung des Fahrgestells mit höhenverstellbaren Rädern beim Befahren von Seitenhängen sinnvoll ist. Es wurde auch vorgeschlagen, den Erntevorsatz gegenüber dem Einzugsförderer selbsttätig um eine horizontal und quer zur Vorwärtsrichtung verlaufende Achse zu verschwenken (DE 295 19 842 U), um stets einen optimalen Schnittwinkel der Mähmesser gegenüber dem Erntegut zu erzielen. Gegenüber dem Einzugsförderer um horizontale Achsen schwenkbare Erntevorsätze sind somit grundsätzlich bekannt.

Da die Erntevorsätze im Stand der Technik nicht um die vertikale Achse gegenüber dem Einzugsförderer oder dem Fahrgestell der Erntemaschine bewegbar sind, folgen sie der Lenkbewegung der gelenkten Hinterräder der Erntemaschine gemeinsam mit dem Fahrgestell. Bei größeren Arbeitsbreiten des Erntevorsatzes sind die äußeren Enden des Erntevorsatzes sehr weit von dem Mittelpunkt zwischen den vorderen Rädern der Erntemaschine entfernt, nicht nur in der Querrichtung, sondern auch in der Vorwärtsrichtung. Diese Entfernung hat einen relativ großen möglichen Radius des kurvenäußeren Endes des Erntevorsatzes zur Folge, so dass es relativ schwierig ist, die Erntemaschine beim Freischneiden des Vorgewendes an den Ecken eines Feldes zu manövrieren. Um die Ecken freizuschneiden, sind unter Umständen mehrere Vorwärts- und Rückwärtsfahrten erforderlich, die einen hohen Zeitaufwand mit sich bringen.

Weiterhin sind Erntemaschinen in Form so genannter Knicklenker (US 4 663 921 A, DE 103 26 367 A) bekannt, die ein zweigeteiltes Fahrgestell mit einer vorderen und einer rückwärtigen Hälfte aufweisen, die aneinander um eine vertikale Achse schwenkbar befestigt sind. Die Hälften weisen jeweils zwei seitlich starr angebrachte, d. h. nicht lenkbare Räder auf. Die mittels eines Lenkzylinders erzielte Bewegung der Hälften um die vertikale Achse definiert die Fahrtrichtung der Erntemaschine. Die vordere Hälfte des Fahrgestells trägt einen Erntevorsatz. Durch die Knicklenkung ist die gedachte vertikale Drehachse, um die sich der Erntevorsatz beim Lenken dreht, gegenüber Erntemaschinen mit einteiligem Fahrgestell zwar etwas nach vorn versetzt worden, jedoch macht sich dieser Unterschied hinsichtlich des möglichen Radius des kurvenäußeren Endes des Erntevorsatzes nicht deutlich bemerkbar. Außerdem ist ein recht hoher Aufwand erforderlich, wenn Erntegut von der vorderen Hälfte des Fahrgestells zur rückwärtigen Hälfte des Fahrgestells transportiert werden soll.

Bei Mähfahrzeugen mit mehreren seitlich nebeneinander angeordneten Mäheinheiten wurde vorgeschlagen (FR 2 427 774 A, DE 196 20 070 A), die mittlere, an der Vorderseite des Mähfahrzeugs angebrachte Mäheinheit abhängig vom jeweiligen Lenkeinschlag des Mähfahrzeugs seitlich zu verschieben oder um die vertikale Achse zu verschwenken, um auch bei einer Kurvenfahrt eine seitliche Überdeckung der von den einzelnen Mäheinheiten gemähten Streifen zu erzielen. Bei derartigen Mähfahrzeugen wird das Erntegut nicht in das Innere des Mähfahrzeugs verbracht.

Die JP 2004 201 580 A beschreibt einen Mähdrescher, bei dem das Schneidwerk um die Hochachse zur Seite schwenkbar ist, um zu Wartungszwecken einen besseren Zugang zur Vorderseite des Mähdreschers zu bekommen.

Die FR 2 192 443 A beschreibt einen Mähdrescher mit einem an der Vorderseite angebrachten Maispflücker, dessen Teilerspitzen um die Hochachse verschwenkbar und mit der Lenkung des Mähdreschers gekoppelt sind, um beim Befahren von Kurven die Ausrichtung der Teilerspitzen besser an die Richtung der Maisreihen anpassen zu können.

Die EP 1 305 995 A beschreibt ein mehrteiliges Erntevorsatzgerät mit mehreren seitlich nebeneinander angeordneten Schneid- und Förderscheiben. Um eine schmale Transportstellung zu erreichen, sind die äußeren Schneid- und Förderscheiben derart gelagert, dass sie die ihnen benachbarten, inneren Schneid- und Förderscheiben satellitenartig umlaufen.

In der nachveröffentlichten EP 1 733 606 A wird eine selbstfahrende Erntemaschine mit einem Vorsatzgerät beschrieben, das um die Hochachse gegenüber der Erntemaschine schwenkbar und mit deren Lenkung gekoppelt ist. Es wird nicht beschrieben, in welcher Weise das Vorsatzgerät von der Erntemaschine abnehmbar ist.

### Problem

Die der Erfindung zu Grunde liegende Aufgabe wird darin gesehen, eine selbstfahrende Erntemaschine mit lenkbaren hinteren Rädern oder anderen Antriebsmitteln bereitzustellen, die sich unproblematisch auf einem Feld manövrieren lässt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erntemaschine weist in an sich bekannter Weise ein Fahrgestell auf, das sich auf dem Erdboden abstützt. Innerhalb des Fahrgestells der Erntemaschine ist eine Erntegutbearbeitungseinrichtung angeordnet, die zum Bearbeiten des Ernteguts dient. Die Erntegutbearbeitungseinrichtung umfasst bei einem Mähdrescher Dresch-, Trenn- und Reinigungseinrichtungen und bei Feldhäckslern Häckselaggregate und ggf. Körnerprozessoren und Nachbeschleuniger. An der Vorderseite des Fahrgestells befindet sich ein Einzugsförderer, der frontseitig eine Erntevorsatzaufnahmeeinrichtung umfasst, an der ein Erntevorsatz lösbar anbringbar oder angebracht ist. Im Erntebetrieb nimmt der Erntevorsatz auf einem Feld liegendes oder stehendes Erntegut auf und übergibt es an den Einzugsförderer, welcher es zur Erntegutbearbeitungseinrichtung verbringt. Die Erntevorsatzaufnahmeeinrichtung ist gegenüber dem Fahrgestell der Erntemaschine um eine zumindest näherungsweise vertikale Achse schwenkbar angelenkt. Die Verschwenkung der Erntevorsatzaufnahmeeinrichtung und somit auch des Erntevorsatzes um die zumindest näherungsweise vertikale Achse erfolgt durch einen Erntevorsatzschwenkaktor.

Auf diese Weise kann der Erntevorsatz selbsttätig gegenüber dem Fahrgestell um die vertikale Hochachse verschwenkt werden. Dadurch lässt sich ein wesentlich verkleinerter Radius des kurvenäußeren Endes des Erntevorsatzes erzielen, was die Lenkbarkeit der Kombination aus Erntemaschine und Erntevorsatz verbessert. Im Ergebnis lassen sich Feldecken wesentlich leichter freischneiden als bei starr am Fahrgestell angebrachten Erntevorsätzen.

Es wäre denkbar, den Einzugsförderer um die Hochachse schwenkbar am Fahrgestell der Erntemaschine anzubringen und die Erntevorsatzaufnahmeeinrichtung starr am Einzugsförderer anzubringen. Dazu wäre allerdings eine bewegliche Verbindungsstelle in einem relativ schlecht zugänglichen Bereich am Ernteguteinlass des Fahrgestells anzubringen. Es bietet sich daher an, die Erntevorsatzaufnahmeeinrichtung um die vertikale Achse schwenkbar am Einzugsförderer anzulenken. Der Einzugsförderer ist dann entweder starr (d. h. nicht um die Hochachse schwenkbar) mit dem Fahrgestell verbunden oder weist in sich und/oder an seiner Verbindungsstelle mit dem Fahrgestell weitere um die Hochachse schwenkbare Verbindungen auf, so dass jeder dieser Verbindungsstellen nur ein Teilbereich des Schwenkwinkels der Erntevorsatzaufnahmeeinrichtung gegenüber dem Fahrgestell zugeordnet werden kann. Diese Anordnung hat den Vorteil, dass nur geringere vertikale Schwenkwinkel an den Verbindungsstellen auftreten, was mögliche Übergabeprobleme beim Ernteguttransport vermeidet oder entschärft. Ein einziger Erntevorsatzschwenkaktor kann dann zwischen dem Fahrgestell und der Erntevorsatzaufnahmeeinrichtung angebracht sein und die Schwenkbewegung der Erntevorsatzaufnahmeeinrichtung gegenüber dem Fahrgestell um den gesamten Schwenkwinkel bewerkstelligen, oder es sind den einzelnen Verbindungsstellen separate Erntevorsatzschwenkaktoren zugeordnet, die jeweils die einzelnen Teilbereiche der Schwenkwinkel realisieren. Im zweiten Fall können die Erntevorsatzschwenkaktoren nacheinander angesteuert werden, d. h. ein zweiter Erntevorsatzschwenkaktor wird erst dann bewegt, wenn der Erntevorsatz um einen den Schwenkbereich eines ersten Erntevorsatzschwenkaktors übersteigenden Winkel verschwenkt wurde, oder sie werden gleichzeitig angesteuert, so dass der Schwenkwinkel stets auf mehrere Erntevorsatzschwenkaktoren verteilt wird.

Um bei einem um die Hochachse verschwenkten Erntevorsatz Übergabeprobleme zwischen dem Erntevorsatz und dem Einzugsförderer zu vermeiden, bietet es sich an, den Einzugsförderer mit einem ersten Förderer und einem zweiten Förderer auszustatten, der stromab des ersten Förderers angeordnet ist. Der erste Förderer ist vorzugsweise eine Walze, insbesondere eine Paddelwalze, mit horizontal und quer zur Vorwärtsrichtung verlaufender Drehachse, während der zweite Förderer vorzugsweise ein Kettenförderer mit Mitnehmern ist, wie er üblicherweise in Schrägförderern von Mähdreschern verwendet wird. Der erste Förderer kann die Form eines (tonnenförmigen) Doppelkonus aufweisen. Bei Feldhäckslern kann der erste Förderer hingegen aus an den Außenseiten des Einzugsförderers angeordneten Fördertrommeln mit vertikalen Drehachsen aufgebaut sein, zwischen denen am Boden und/oder an der Oberseite des Einzugsförderers eine weitere Fördertrommel mit horizontaler und quer zur Vorwärtsrichtung orientierter Drehachse angeordnet sein kann, während der zweite Förderer vorzugsweise aus an sich bekannten Vorpresswalzen aufgebaut ist.

Bei einer möglichen Ausführungsform der Erfindung ist die Erntevorsatzaufnahmeeinrichtung mit einer sich nach hinten erstreckenden Seitenwand verbunden, die an der Innen- oder Außenseite einer Seitenwand des Einzugsförderers anliegt. Die beiden Seitenwände bewegen sich relativ zueinander, wenn die Erntevorsatzaufnahmeeinrichtung um die Hochachse verschwenkt wird und bilden eine körner- und staubdichte Abdichtung zwischen der Erntevorsatzaufnahmeeinrichtung und dem Einzugsförderer. Wegen der Schwenkbewegung müsste mindestens eine der Seitenwände einen Radius aufweisen, dessen Mittelpunkt mit dem Schwenkpunkt der Erntevorsatzaufnahmeeinrichtung zusammenfällt, oder in sich flexibel oder biegsam sein. Bei einer anderen Ausführungsform ist zwischen der Erntevorsatzaufnahmeeinrichtung und einer in sich starren Seitenwand des Einzugsförderers ein Faltenbalg angeordnet, um eine körner- und staubdichte Abdichtung zwischen der Erntevorsatzaufnahmeeinrichtung und dem Einzugsförderer zu erhalten.

In einer vorteilhaften Ausführungsform der Erfindung weist das Fahrgestell der Erntemaschine ein Paar vorderer im Eingriff mit dem Erdboden befindlicher Mittel und hintere im Eingriff mit dem Erdboden befindliche Mittel auf. Bei diesen Mitteln handelt es sich in der Regel um Räder oder Raupenlaufwerke. Die hinteren Mittel, bei denen es sich um ein oder zwei Räder oder Raupenlaufwerke handeln kann, sind in der normalen Vorwärtsrichtung der Erntemaschine, in der sie im Erntebetrieb über ein Feld bewegt wird, hinter den vorderen Mitteln angeordnet und durch einen Lenkaktor lenkbar, d. h. um eine vertikal verlaufende Achse drehbar angebracht, bzw. im Fall von Raupenlaufwerken mit unterschiedlichen Geschwindigkeiten antreibbar, um die Erntemaschine lenken zu können, d. h. ihre Fahrtrichtung vorzugeben. Der Erntevorsatzschwenkaktor ist vorteilhafter Weise antriebsmäßig mit dem Lenkaktor koppelbar, d. h. der Antrieb des Erntevorsatzschwenkaktors kann (wahlweise oder permanent) mit dem Antrieb des Lenkaktors derart verknüpft oder gekoppelt werden, dass der Erntevorsatzschwenkaktor bei einer Lenkbewegung des Lenkaktors selbsttätig aktiviert wird. Dadurch erspart man sich separate Eingabemittel für einen Bediener zur Ansteuerung des Erntevorsatzschwenkaktors. Der Lenkaktor und der Erntevorsatzschwenkaktor sind vorzugsweise mit einer gemeinsamen Steuereinrichtung verbunden.

Die Eingangsgröße für den jeweils einzustellenden Lenkwinkel kann eine Bedienereingabeeinrichtung insbesondere in Form eines Lenkrads oder Joysticks, bereitstellen, oder sie wird durch eine drahtlose Fernsteuerung oder mittels einer selbsttätigen Lenksteuerung bereitgestellt, welche auf einem abgespeicherten Wegplan und einer Information hinsichtlich der aktuellen Position der Erntemaschine und/oder auf einer optischen und/oder mechanischen Erfassung der Erntegutkante beruht. Die Steuereinrichtung steuert den Lenkaktor derart an, dass die Erntemaschine sich in der gewünschten Richtung bewegt. Der Erntevorsatzschwenkaktor kann permanent an den Lenkaktor gekoppelt sein, so dass er sich stets gemeinsam mit dem Lenkaktor bewegt, insbesondere derart, dass sich eine gegensinnige Bewegung von Erntevorsatz und den hinteren im Eingriff mit dem Erdboden befindlichen Mitteln ergibt, was die beschriebene Verringerung des Radius des kurvenäußeren Endes des Erntevorsatzes zur Folge hat. Bei einer bevorzugten Ausführungsform der Erfindung ist der Erntevorsatzschwenkaktor jedoch nicht permanent, sondern abschaltbar an den Lenkaktor gekoppelt, damit die Bewegung der Erntevorsatzaufnahmeeinrichtung in Fällen, in denen sie unnötig oder gar hinderlich ist, unterbunden werden kann, z. B. bei der Fahrt auf einer Straße. Dazu kann eine Eingabeeinrichtung vorgesehen sein, mit der auf eine entsprechende Eingabe hin der Erntevorsatzschwenkaktor permanent in seine Ruhestellung, in der der Erntevorsatz quer zur Vorwärtsrichtung ausgerichtet ist, verbracht wird. Diese Ruhestellung wird insbesondere auch selbsttätig angesteuert, wenn ein Straßen/Feldbetriebsschalter in die Stellung für eine Straßenfahrt verbracht wird. Die Eingabeeinrichtung kann auch eine dritte Stellung aufweisen, in der die Erntevorsatzaufnahmeeinrichtung und die hinteren im Eingriff mit dem Erdboden befindlichen Mittel gleichsinnig um die Hochachse gelenkt werden, um eine Art Hundegang zu realisieren, in dem ungünstig gelegene Teile eines Felds abgeerntet werden können.

Die erfindungsgemäße Lenkeinrichtung eignet sich für alle Arten selbstfahrender Erntemaschinen wie Mähdrescher, Feldhäcksler, Baumwollpflücker oder selbstfahrende Ballenpressen.

### Ausführunasbeispiel

In den Zeichnungen sind zwei nachfolgend näher beschriebene Ausführungsbeispiele der Erfindung dargestellt. Es zeigt:
- Fig. 1: eine seitliche Ansicht einer selbstfahrenden Erntemaschine,
- Fig. 2: die Erntemaschine aus Figur 1 in einer Draufsicht mit den hinteren lenkbaren Mitteln und dem Erntevorsatz in Ruhestellung,
- Fig. 3: die Draufsicht aus Figur 2 mit nach links verstellten hinteren lenkbaren Mitteln und um die Hochachse nach rechts verschwenktem Erntevorsatz,
- Fig. 4: einen vertikalen Schnitt durch den Erntevorsatz und den Einzugsförderer der Erntemaschine entlang der Linie 4-4 der Figur 2,
- Fig. 5: ein Schema der Steuereinrichtung zur Ansteuerung des Lenkaktors und des Erntevorsatzschwenkaktors,
- Fig. 6: eine Draufsicht auf den vorderen Bereich eines Einzugsförderers mit einer um eine horizontale, in Vorwärtsrichtung verlaufende Achse schwenkbar daran befestigten Erntevorsatzaufnahmeeinrichtung gemäß einer zweiten Ausführungsform der Erfindung, und
- Fig. 7: eine seitliche Ansicht des Einzugsförderers nach Figur 6.

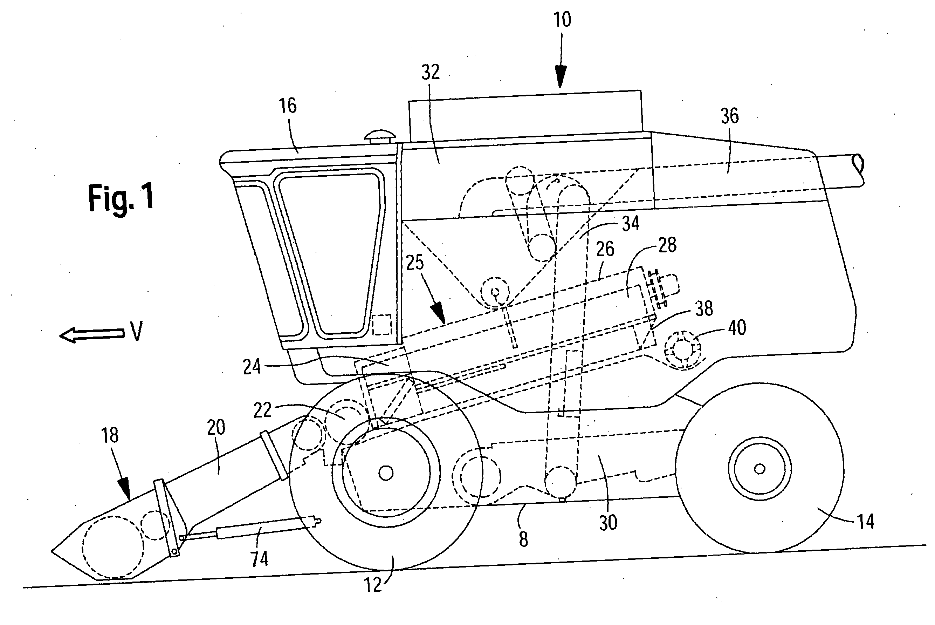

Eine in der Figur 1 gezeigte Erntemaschine 10 in der Form eines Mähdreschers umfasst ein Fahrgestell 8, das auf zwei vorderen angetriebenen, im Eingriff mit dem Erdboden befindlichen Mitteln 12 in Form von Rädern und zwei hinteren, lenkbaren, im Eingriff mit dem Erdboden stehenden Mitteln 14 in Form von Rädern getragen wird und eine Fahrerkabine 16 aufweist, von der aus die Erntemaschine 10 von einem Fahrer bedient werden kann. Bei der Ernte und beim Fahren auf einer Straße wird die Erntemaschine 10 in der durch die Blickrichtung des Fahrers in der Fahrerkabine 16 definierten, normalen Vorwärtsfahrtrichtung V voranbewegt. Sie kann aber vorübergehend, z. B. zum Wenden, auch rückwärts gefahren werden.

Ein Erntevorsatz 18 in Form eines Schneidwerks wird verwendet, um Erntegut aufzunehmen und es einem Einzugsförderer 20 in Form eines Schrägförderers zuzuführen. Das Erntegut wird vom Einzugsförderer 20 einer Leittrommel 22 zugeführt. Die Leittrommel 22 leitet das Erntegut nach oben durch einen Einlassübergangsbereich 24 an eine Erntegutbearbeitungseinrichtung 25 in Form einer Axialtrennvorrichtung weiter. Die Erntegutbearbeitungseinrichtung 25 umfasst ein zylindrisches Rotorgehäuse 26 und einen im Rotorgehäuse 26 angeordneten Rotor 28.

Die Erntegutbearbeitungseinrichtung 25 drischt und trennt das geerntete Gut. Korn und Spreu fallen durch Roste am Boden der Erntegutbearbeitungseinrichtung 25 in ein Reinigungssystem 30, das ebenfalls zur Erntegutbearbeitungseinrichtung 25 gehört.
Das Reinigungssystem 30 entfernt die Spreu und führt das saubere Korn einem Kornelevator 34 zu. Der Kornelevator 34 legt das saubere Korn in einem Korntank 32 ab. Das saubere Korn im Korntank 32 kann durch einen Entladeschneckenförderer 36 in einen Anhänger oder Lastwagen entladen werden. Gedroschenes, vom Korn befreites Stroh wird aus der Axialtrennvorrichtung durch einen Auslass 38 heraus zu einer Abgabetrommel 40 geführt. Die Abgabetrommel 40 wirft das Stroh am rückwärtigen Ende der Erntemaschine 10 aus. Sie könnte es auch einem Strohhäcksler (nicht gezeigt) zuführen, der es häckselt und über die Schnittbreite des Erntevorsatzes 18 über das Feld verteilt. Die antreibbaren Komponenten der Erntemaschine 10 werden durch einen Verbrennungsmotor angetrieben.

Im Folgenden beziehen sich alle Richtungsangaben, wie vorn, hinten, oben und unten auf die normale Vorwärtsfahrtrichtung V.

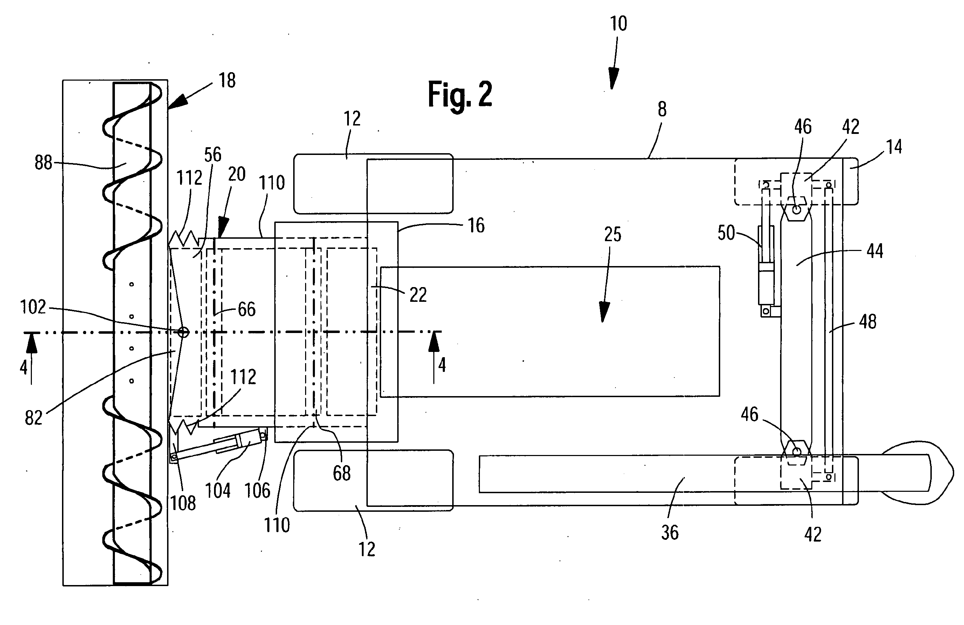

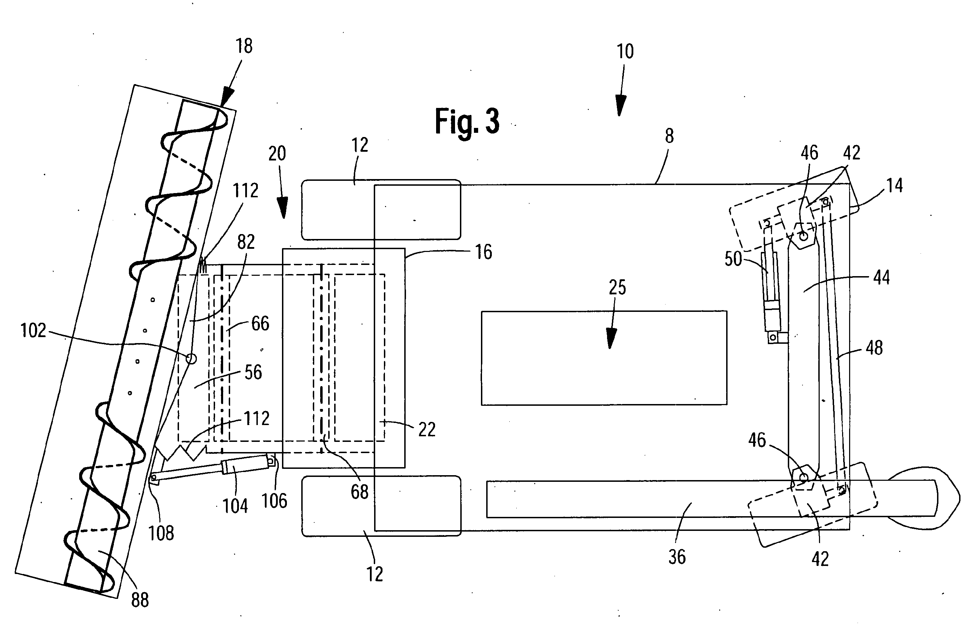

Die Figur 2 zeigt eine Draufsicht auf die Erntemaschine 10. Die hinteren Mittel 14 umfassen Radhalterungen 42, die um vertikale Achsen 46 schwenkbar an einer Pendelachse 44 befestigt sind, welche in ihrer Mitte um eine horizontal und in Vorwärtsrichtung V verlaufende Achse (nicht gezeigt) schwenkbar am Fahrgestell 8 angelenkt ist. Die Radhalterungen 42 sind im Abstand von den Achsen 46 untereinander durch eine Spurstange 48 verbunden. Ein Lenkaktor 50 in Form eines Hydraulikzylinders ist mit seinem Gehäuse mit der Pendelachse 44 und mit seiner Kolbenstange mit einer Radhalterung 42 verbunden. Dadurch lassen sich die hinteren Mittel 44 gleichsinnig um die Achsen 46 drehen, wie in der Figur 3 dargestellt, um die Erntemaschine 10 in eine gewünschte Richtung zu lenken. Anstelle eines Hydraulikzylinders könnte für den Lenkaktor 50 auch ein rotierender Hydraulikmotor oder ein Elektromotor oder ein Pneumatikzylinder verwendet werden.

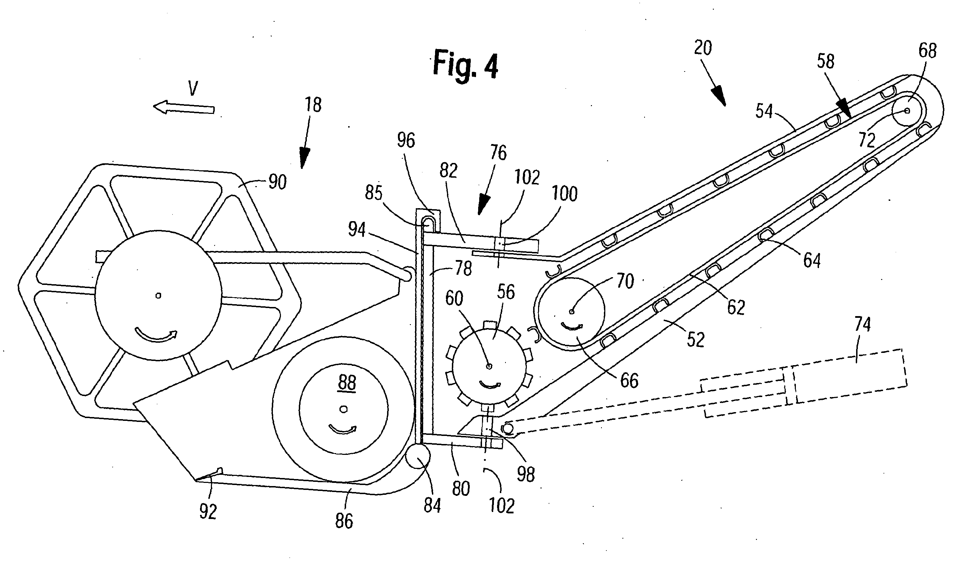

Es wird nun auf die Figur 4 verwiesen, in der der Einzugsförderer 20 und der Erntevorsatz 18 detaillierter in einem vertikalen Schnitt dargestellt werden. Der Einzugsförderer 20 umfasst ein Gehäuse mit unteren Wänden 52 und oberen Wänden 54, in dem ein erster Förderer 56 und ein zweiter Förderer 58 angeordnet sind. Der erste Förderer 56 ist in Form einer rotativ angetriebenen Walze mit Mitnehmern (z. B. Paddeln) ausgeführt, die um eine horizontal und quer zur Vorwärtsrichtung orientierte Achse 60 rotiert. Der zweite Förderer 58 befindet sich stromab des ersten Förderers 56 und umfasst mehrere seitlich nebeneinander angeordnete, um eine untere Walze 66 und eine obere Walze 68 umlaufende Förderketten 62 mit außen daran befestigten Mitnehmerleisten 64. Die untere Walze 66 und/oder die obere Walze 68 sind mit einem Antrieb verbunden, der vorzugsweise zusätzlich die antreibbaren Elemente des Erntevorsatzes 18 antreibt, in der Regel über eine längenveränderbare Gelenkwelle. Die Drehachsen 70, 72 der Walzen 66 und 68 sind parallel zur Achse 60. Der Einzugsförderer 20 ist um die Drehachse 72 der oberen Walze 68 drehbar am Fahrgestell 8 angelenkt. Ein Höhenverstellaktor 74 (s. auch Figur 1) in Form eines Hydraulikzylinders erstreckt sich zwischen dem Fahrgestell 8 und dem vorderen Ende des Einzugsförderers 20, um die Höhe des Erntevorsatzes 18 über dem Erdboden bzw. seinen Auflagedruck mittels einer geeigneten Steuerung auf einen gewünschten Wert zu bringen. Ein zweiter, gleichartiger Höhenverstellaktor 74 kann auf der anderen Seite des Einzugsförderers 20 angeordnet sein.

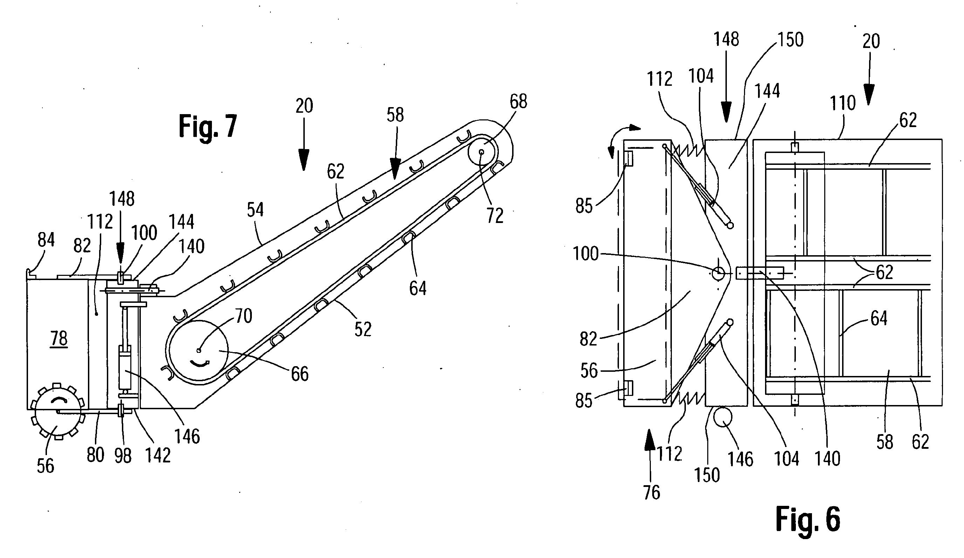

An der Vorderseite des Einzugsförderers 20 ist eine Erntevorsatzaufnahmeeinrichtung 76 angeordnet, die einen Rahmen mit zwei beidseits einer mittigen Durchlassöffnung für das Erntegut angeordneten vertikalen Trägern 78, einem horizontalen unteren Bodenblech 80 und einem horizontalen oberen Deckblech 82 umfasst, das - wie auch das untere Bodenblech 80 - in der Draufsicht (Figur 2) dreieckig ist. An der vorderen Oberseite des oberen Deckblechs 82 sind zwei seitlich nebeneinander angeordnete, nach oben überstehende Stege 85 (s. auch Figur 6) angeordnet.

Der Erntevorsatz 18 umfasst ein sich horizontal und quer zur Vorwärtsrichtung erstreckendes unteres Trägerrohr 84, an dem ein sich nach vorn erstreckender unterer Trog 86 befestigt ist, an dessen Vorderseite ein Mähbalken 92 vorgesehen ist und über dem eine Querförderschnecke 88 angeordnet ist, oberhalb der sich eine Haspel 90 befindet. Vom Trägerrohr 84 erstreckt sich ein vertikaler Träger 94 nach oben, an dessen Oberseite Haken 96 angebracht sind, welche den Steg 85 hintergreifen. Es können weitere Verriegelungen zwischen dem Trägerrohr 84 und dem unteren Bodenblech 80 der Erntevorsatzaufnahmeeinrichtung 76 vorgesehen sein. Der Erntevorsatz 18 ist somit abnehmbar an der Erntevorsatzaufnahmeeinrichtung 76 angebracht, die einen mittigen Durchlass bildet, durch den das Erntegut vom Erntevorsatz 18 zum ersten Förderer 56 gelangen kann. Anders als in der Figur 4 dargestellt, könnte der erste Förderer 56 (oder ein dritter, nicht eingezeichneter Förderer, der in seinem Aufbau vorzugsweise dem ersten Förderer 56 entspricht) auch an der Erntevorsatzaufnahmeeinrichtung 76 befestigt sein und sich mit ihr bewegen.

Das untere Bodenblech 80 ist durch einen sich vertikal erstreckenden Stift 98 mit der unteren Wand 52 des Einzugsförderers 20 verbunden. Auch das obere Deckblech 82 ist durch einen Stift 100 mit der oberen Wand 54 des Einzugsförderers 20 verbunden. Die Stifte 98, 100 sind koaxial zueinander angeordnet und definieren eine vertikale Achse 102, um die die Erntevorsatzaufnahmeeinrichtung 76 gegenüber dem Gehäuse des Einzugsförderers 20 schwenkbar ist. Es ist beliebig, ob die Stifte 98, 100 drehfest mit dem Bodenblech 80 bzw. dem Deckblech 82 oder der Wand 52 bzw. 54 verbunden oder frei drehbar sind. Ein Erntevorsatzschwenkaktor 104 in Form eines doppelt wirkenden Hydraulikzylinders ist mit seinem Gehäuse an einer mit der Seitenwand des Einzugsförderers 20 angebrachten Konsole 106 und mit seiner Kolbenstange mit einer Halterung 108 verbunden, die an einem vertikalen Träger 78 der Erntevorsatzaufnahmeeinrichtung 76 befestigt ist. Anstelle eines Hydraulikzylinders könnte für den Erntevorsatzschwenkaktor 104 auch ein rotierender Hydraulikmotor oder ein Elektromotor oder ein Pneumatikzylinder verwendet werden.

Das Gehäuse des Einzugsförderers 20 umfasst, wie in den Figuren 2 und 3 erkennbar, Seitenwände mit rückwärtigen Bereichen 110 aus in sich starrem Material, insbesondere Blech. Die vorderen Bereiche der Seitenwände des Gehäuses des Einzugsförderers 20 sind durch Faltenbälge 112 realisiert, die sich auseinanderziehen und zusammenschieben lassen.

Durch eine geeignete Beaufschlagung des Erntevorsatzschwenkaktors 104 kann die Erntevorsatzaufnahmeeinrichtung 76 mit dem Erntevorsatz 18 somit um die vertikale Achse 102 verschwenkt werden, wie in der Figur 3 beispielhaft gezeigt. Durch die dargestellte gegensinnige Drehung mit den hinteren lenkbaren Mitteln 14 erreicht man einen gegenüber einem nicht um die vertikale Achse 102 drehbar angelenkten Erntevorsatz 18 eine Verringerung des Radius des kurvenäußeren Endes des Erntevorsatzes 18, was insbesondere das Freischneiden von Ecken eines Felds erleichtert.

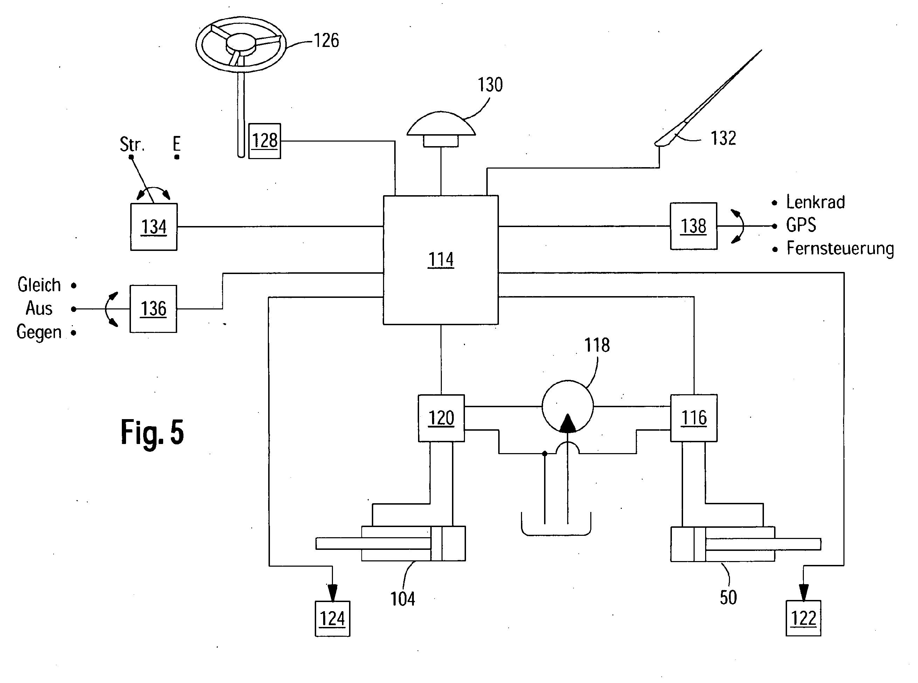

Die Figur 5 zeigt ein Schema der Ansteuerung des Lenkaktors 50 und des Erntevorsatzschwenkaktors 104. Eine elektronische Steuereinheit 114 ist mit einer ersten elektromagnetischen Ventileinrichtung 116 verbunden. Die Ventileinrichtung 116 ist über jeweils eine Leitung mit einer Pumpe 118 zur Bereitstellung unter Druck stehendem Hydraulikfluids und einem Tank verbunden, sowie mit der Kolbenkammer und der Zylinderbodenkammer des Lenkaktors 50. Die elektronische Steuereinheit 114 ist außerdem mit einer zweiten elektromagnetischen Ventileinrichtung 120 verbunden. Die Ventileinrichtung 116 ist über jeweils eine Leitung mit einer Pumpe 118 zur Bereitstellung unter Druck stehendem Hydraulikfluids und einem Tank verbunden, sowie mit der Kolbenkammer und der Zylinderbodenkammer des Erntevorsatzschwenkaktors 104. Ein Sensor 122 erfasst die Stellung des Lenkaktors 50 und übermittelt der Steuereinheit 114 ein Signal, das eine Information über die Stellung des Lenkaktors 50 beinhaltet. Ein Sensor 124 erfasst die Stellung des Erntevorsatzschwenkaktors 104 und übermittelt der Steuereinheit 114 ein Signal, das eine Information über die Stellung des Erntevorsatzschwenkaktors 104 beinhaltet.

Zur Vorgabe einer gewünschten Fahrtrichtung ist in der Fahrerkabine 16 eine Bedienereingabeeinrichtung 126 in Form eines Lenkrads vorhanden, deren Winkelstellung mittels eines Lenkwinkelsensors 128 erfasst und der Steuereinrichtung 114 zugeführt wird. Die Steuereinrichtung ist weiterhin mit einem Positionssensor 130 in Form einer Antenne zum Empfang von Positionssignalen verbunden, welche Signale von Satelliten des GPS oder eines anderen geeigneten Positionierungssystems empfängt. Weiterhin ist die Steuereinrichtung 114 mit einer Antenne 132 verbunden, mit der Lenksteuerinformationen von einem beabstandeten Leitstand an die Steuereinrichtung 114 übertragen werden können.

Die Steuereinrichtung 114 ist weiterhin mit einem Schalter 134 zur Umstellung zwischen einem Straßenfahrbetrieb (Position "Str.") und einem Erntebetrieb (Position "E") sowie einem Schalter 136 verbunden, der eine Position für Aus, eine Position für eine gleichsinnige Drehung von Erntevorsatz 18 und hinteren, lenkbaren Mitteln 14 (Position "Gleich") und eine Position für eine gegensinnige Drehung von Erntevorsatz 18 und hinteren, lenkbaren Mitteln 14 (Position "Gegen") umfasst.

Im Betrieb steuert die Steuereinrichtung 114 den Lenkaktor 50 in an sich bekannter Weise derart an, dass ein vorgegebener Winkel der hinteren, lenkbaren Mittel 14 erreicht wird. Der jeweilige Sollwert wird, je nach der mittels eines weiteren, durch den Bediener in der Fahrerkabine 16 betätigbaren Eingabeschalters 138 ausgewählten Betriebsart vom Lenkwinkelsensor 128, vom Positionssensor 130 in Verbindung mit einem in der Steuereinrichtung 114 abgespeicherten Wegplan oder über die Antenne 132 vom beabstandeten Leitstand her vorgegeben und mit einem Istwert verglichen, der mit dem Sensor 122 erfasst wird. Die Steuereinrichtung 114 steuert die Position des Lenkaktors 50 durch eine entsprechende Ansteuerung der Ventileinrichtung 116 derart an, dass der gewünschte Winkel der hinteren, lenkbaren Mittel 14 um die vertikale Achse 46 erreicht wird.

Die Steuereinrichtung 114 steuert den Erntevorsatzschwenkaktor 104 mittels der Ventileinrichtung 120 derart an, dass der Erntevorsatz in seine in Figur 2 gezeigte Ruhestellung gelangt, wenn der Schalter 134 in der Stellung für die Straßenfahrt ist. Die Steuereinrichtung 114 steuert den Erntevorsatzschwenkaktor 104 mittels der Ventileinrichtung 120 ebenfalls derart an, dass der Erntevorsatz in seine in Figur 2 gezeigte Ruhestellung gelangt, wenn der Schalter 136 in der Aus-Stellung ist. Die selbsttätige Verschwenkung des Erntevorsatzes 18 kann somit in Fällen, in denen sie nicht gewünscht wird, z. B. bei langer Geradeausfahrt, ausgeschaltet werden.

Befindet sich der Schalter 134 in der Stellung für Erntebetrieb und der Schalter 136 in der Stellung für gegensinniges Lenken, wird der Erntevorsatzschwenkaktor 104 durch die Steuereinrichtung 114 mittels der Ventileinrichtung 120 derart angesteuert, dass die Erntevorsatzaufnahmeeinrichtung 76 um einen zum Ist- oder Sollwert des Schwenkwinkels der hinteren Mittel 14 um die Achse 46 gegensinnigen Winkel um die Achse 102 verschwenkt wird. Der Zusammenhang zwischen den beiden erwähnten Winkeln ist vorzugsweise proportional, obwohl auch nicht-proportionale, z. B. quadratisch, kubisch oder exponentiell mit dem Winkel der hinteren Mittel 14 anwachsende Winkel der Erntevorsatzaufnahmeeinrichtung 76 denkbar wären. Der Zusammenhang kann fest vorgegeben oder durch den Bediener über eine geeignete Eingabeeinrichtung (nicht gezeigt) definierbar sein, die z. B. eine Eingabe eines Proportionalitätsfaktors ermöglicht. Dabei wird die aktuelle Position des Erntevorsatzschwenkaktors 104 mittels des Sensors 124 erfasst und mit seiner Sollposition verglichen und die Ventileinrichtung 120 derart angesteuert, dass die Sollposition erreicht wird. Der Schwenkwinkel der Erntevorsatzaufnahmeeinrichtung 76 aus der Ruheposition kann auch von der Vorwärtsgeschwindigkeit V abhängen und um so kleiner sein, je größer die Vorwärtsgeschwindigkeit ist, um bei höheren Geschwindigkeiten Instabilitäten des Fahrverhaltens der Erntemaschine zu vermeiden. In dieser Betriebsart, die in der Figur 3 illustriert wird, kann die Erntemaschine 10 besonders einfach um Feldecken bewegt werden.

Befindet sich der Schalter 134 in der Stellung für Erntebetrieb und der Schalter 136 in der Stellung für gleichsinniges Lenken, wird der Erntevorsatzschwenkaktor 104 durch die Steuereinrichtung 114 mittels der Ventileinrichtung 120 derart angesteuert, dass die Erntevorsatzaufnahmeeinrichtung 76 um einen zum Ist- oder Sollwert des Schwenkwinkels der hinteren Mittel 14 um die Achse 46 gleichsinnigen Winkel um die Achse 102 verschwenkt wird. Der Zusammenhang zwischen den beiden erwähnten Winkeln ist vorzugsweise wie oben beschrieben festgelegt. In dieser Betriebsart, die eine Art Hundegang darstellt, können ansonsten schwer zugängliche Bereiche von Feldern abgeerntet werden.

Es wäre auch denkbar, in der Fahrerkabine eine separate Eingabeeinrichtung anzubringen, mit der der Erntevorsatzschwenkaktor 104 durch den Bediener angesteuert werden kann, unabhängig von der Bedienereingabeeinrichtung 126. Dann wäre für den Schalter 136 eine vierte Stellung bereitzustellen, in der die separate Eingabeeinrichtung, mit der der Erntevorsatzschwenkaktor 104 angesteuert werden kann, aktiv ist.

Die Figuren 6 und 7 zeigen eine andere Ausführungsform des Einzugsförderers 20. Mit der ersten Ausführungsform übereinstimmende Elemente sind mit denselben Bezugszeichen gekennzeichnet. Ein Unterschied zur ersten Ausführungsform besteht darin, dass an der Vorderseite des Einzugsförderers 20 ein Pendelrahmen 148 um eine horizontal und in Vorwärtsrichtung verlaufende Pendelachse pendelnd angelenkt ist. Diese Pendelachse wird mittels eines Schwenkstifts 140 realisiert, der an der Vorderseite der oberen Wand 54 sich horizontal und in Vorwärtsrichtung V erstreckend befestigt ist. Der Schwenkstift 140 trägt den Pendelrahmen 148 um seine Längsachse pendelnd. Anstelle der realen Pendelachse könnte durch geeignete Lagerungen auch eine virtuelle Pendelachse realisiert werden, die sich in der Mitte der Einlassöffnung des Einzugsförderers 20 befindet.

Der Pendelrahmen 148 weist eine untere Wand 142 auf, die den sich vertikal erstreckenden Stift 98 aufnimmt, und eine obere Wand 144, die den sich ebenfalls vertikal erstreckenden Stift 100 aufnimmt. Ein Pendelzylinder 146 zur Herstellung einer Pendelbewegung ist an seinem einen Ende an der Seitenwand 110 des Einzugsförderers 20 und an seinem anderen Ende am Pendelrahmen 148 befestigt. Der Pendelzylinder 146 ist in an sich bekannter Weise mit einer Steuerung verbunden, die den Erntevorsatz 18 in einer gewünschten Höhe oder mit einem gewünschten Auflagedruck über den Boden führt. Die untere Wand 142 und die obere Wand 144 sind durch Seitenwände 150 untereinander verbunden.

Bei der zweiten Ausführungsform erstrecken sich zwei (als einfach oder doppelt wirkende Hydraulikzylinder ausgeführte) Erntevorsatzschwenkaktoren 104 jeweils zwischen einem - etwa mittig zwischen dem die vertikale Achse 102 definierenden Stift 100 und der Seitenwand 150 des Pendelrahmens 148 liegenden - Befestigungspunkt an der oberen Wand 144 des Pendelrahmens 148 und einem Befestigungspunkt an der Außenseite des oberen Deckblechs 82 der Erntevorsatzaufnahmeeinrichtung 76. Diese Anordnung könnte analog auch auf die erste Ausführungsform übertragen werden. Es könnte bei beiden Ausführungsformen jeweils einer der Erntevorsatzschwenkaktoren 104 entfallen; der verbleibende müsste dann doppelt wirkend sein.

Bei der zweiten Ausführungsform ist der sich horizontal und parallel zu den Längsachsen der Stege 85 erstreckende, als Mitnehmerwalze ausgeführte erste Förderer 56 innerhalb einer Aussparung oder Mulde des Bodenblechs 80 der Erntevorsatzaufnahmeeinrichtung 76 eingelassen. Er fördert das Erntegut oberschlächtig. Der Antrieb des ersten Förderers 56 kann über eine Gelenkwelle von der Welle der unteren Walze 66 des zweiten Förderers 58 erfolgen.

Bei beiden Ausführungsformen wäre anstelle der Erntevorsatzschwenkaktoren 104 auch eine mechanische Verbindung (Seilzüge o. ä.) zwischen dem Lenkaktor 50 und der um die Hochachse schwenkbaren Erntevorsatzaufnahmeeinrichtung 76 möglich.

## Patentansprüche

1. Selbstfahrende landwirtschaftliche Erntemaschine (10), die in einer normalen Vorwärtsfahrtrichtung (V) vortreibbar ist und ein Fahrgestell (8) aufweist, das eine innerhalb des Fahrgestells (8) angeordnete Erntegutbearbeitungseinrichtung (25) und einen an der Vorderseite des Fahrgestells (8) angeordneten Einzugsförderer (20) umfasst, an dessen Vorderseite eine Emtevorsatzaufnahmeeinrichtung (76) angeordnet ist, an der ein Erntevorsatz (18) zur Aufnahme von Erntegut lösbar anbringbar oder angebracht ist, welches im Erntebetrieb durch den Einzugsförderer (20) der Erntegutbearbeitungseinrichtung (25) zuführbar ist, **dadurch gekennzeichnet, dass** die Erntevorsatzaufnahmeeinrichtung (76) durch einen Emtevorsatzschwenkaktor (104) gegenüber dem Fahrgestell (8) um eine vertikale Achse (102) schwenkbar ist.

2. Erntemaschine (10) nach Anspruch 1, **dadurch gekennzeichnet, dass** die Emtevorsatzaufnahmeeinrichtung (76) gegenüber dem Einzugsförderer (20) um die vertikale Achse (102) schwenkbar gelagert ist.

3. Erntemaschine (10) nach einem der vorhergehenden Ansprüche, **dadurch gekennzeichnet, dass** der Einzugsförderer (20) einen ersten Förderer (56) und einen stromab des ersten Förderers (56) angeordneten, zweiten Förderer (58) umfasst.

4. Erntemaschine (10) nach Anspruch 3, **dadurch gekennzeichnet, dass** der erste Förderer (56) eine Walze mit horizontal und quer zur normalen Vorwärtsrichtung verlaufender Drehachse (60) ist.

5. Erntemaschine (10) nach Anspruch 3 oder 4, **dadurch gekennzeichnet, dass** der zweite Förderer (58) ein Kettenförderer ist.

6. Erntemaschine (10) nach einem der vorhergehenden Ansprüche, **dadurch gekennzeichnet, dass** zwischen der Emtevorsatzaufnahmeeinrichtung (76) und einer in sich starren Seitenwand (110) des Einzugsförderers (20) ein Faltenbalg (112) vorhanden ist.

7. Erntemaschine (10) nach einem der vorhergehenden Ansprüche, **dadurch gekennzeichnet, dass** das Fahrgestell (8) ein Paar vordere im Eingriff mit dem Erdboden befindliche Mittel (12) und hintere im Eingriff mit dem Erdboden befindliche Mittel (14) umfasst, welche bezüglich der normalen Vorwärtsfahrtrichtung (V) hinter den vorderen Mitteln (12) angeordnet und durch einen Lenkaktor (50) lenkbar sind, und dass der Emtevorsatzschwenkaktor (104) antriebsmäßig mit dem Lenkaktor (50) koppelbar ist.

8. Erntemaschine (10) nach Anspruch 7, **dadurch gekennzeichnet, dass** der Lenkaktor (50) und der Emtevorsatzschwenkaktor (104) mit einer Steuereinrichtung (114) verbunden sind, die als Eingangsgröße Signale von einer Bedienereingabeeinrichtung (126) und/oder einer mit einer drahtlosen Fernsteuerung verbundenen Antenne (132) und/oder einer selbsttätigen Lenksteuerung mit einem Positionssensor (130) und/oder Emtegutkantensensor erhält.

9. Erntemaschine (10) nach einem der Ansprüche 7 oder 8, **dadurch gekennzeichnet, dass** die Kopplung zwischen dem Lenkaktor (50) und dem Erntevorsatzschwenkaktor (104) abschaltbar ist, insbesondere für eine Straßenfahrt.

10. Erntemaschine (10) nach einem der Ansprüche 7 bis 9, **dadurch gekennzeichnet, dass** der Lenkaktor (50) und der Emtevorsatzschwenkaktor (104) insbesondere wahlweise derart koppelbar sind, dass die Emtevorsatzaufnahmeeinrichtung (76) und die hinteren im Eingriff mit dem Erdboden befindlichen Mittel (14) gegensinnig oder gleichsinnig bewegt werden.

## Claims

1. Self-propelled agricultural harvester (10) which can be driven in a normal forwards direction of travel (V) and has a chassis (8) which comprises a crop processing device (25) arranged within the chassis (8) and an intake conveyor (20) which is arranged on the front side of the chassis (8) and on the front side of which is arranged a header receiving device (76) to which a header (18) for picking up crop can be or is releasably attached, the crop being feedable to the crop processing device (25) during the harvesting operation by the intake conveyor (20), **characterized in that** the header receiving device (76) can be pivoted about a vertical axis (102) in relation to the chassis (8) by a header pivoting actuator (104).

2. Harvester (10) according to Claim 1, **characterized in that** the header receiving device (76) is mounted pivotably about the vertical axis (102) in relation to the intake conveyor (20).

3. Harvester (10) according to one of the preceding claims, **characterized in that** the intake conveyor (20) comprises a first conveyor (56) and a second conveyor (58) arranged downstream of the first conveyor (56).

4. Harvester (10) according to Claim 3, **characterized in that** the first conveyor (56) is a roller with an axis of rotation (60) running horizontally and transversely with respect to the normal forwards direction.

5. Harvester (10) according to Claim 3 or 4, **characterized in that** the second conveyor (58) is a chain conveyor.

6. Harvester (10) according to one of the preceding claims, **characterized in that** there is an expansion bellows (112) between the header receiving device (76) and an inherently rigid side wall (110) of the intake conveyor (20).

7. Harvester (10) according to one of the preceding claims, **characterized in that** the chassis (8) comprises a pair of front means (12) in engagement with the ground and a pair of rear means (14) which are in engagement with the ground, are arranged behind the front means (12) with respect to the normal forwards direction of travel (V) and can be steered by means of a steering actuator (50), and **in that** the header pivoting actuator (104) can be coupled in terms of drive to the steering actuator (50).

8. Harvester (10) according to Claim 7, **characterized in that** the steering actuator (50) and the header pivoting actuator (104) are connected to a control device (114) which receives, as an input variable, signals from an operator input device (126) and/or an antenna (132) connected to a wireless remote control and/or an automatic steering controller with a position sensor (130) and/or crop edge sensor.

9. Harvester (10) according to either of Claims 7 and 8, **characterized in that** the coupling between the steering actuator (50) and the header pivoting actuator (104) can be switched off, in particular for road travel.

10. Harvester (10) according to one of Claims 7 to 9, **characterized in that** the steering actuator (50) and the header pivoting actuator (104) can be coupled, in particular selectively, in such a manner that the header receiving device (76) and the rear means (14) in engagement with the ground are moved in opposite directions or the same direction.

## Revendications

1. Moissonneuse agricole automotrice (10), qui peut être entraînée dans une direction de marche avant (V) et qui présente un châssis de roulement (8) qui comprend un dispositif de traitement de récolte (25) disposé à l'intérieur du châssis de roulement (8) et un transporteur d'entrée (20) disposé du côté avant du châssis de roulement (8), sur le côté avant duquel est disposé un dispositif de réception d'auxiliaire de récolte (76), sur lequel est monté ou peut être monté de manière détachable un auxiliaire de récolte (18) pour recevoir la récolte, lequel peut être acheminé pendant l'opération de récolte à travers le transporteur d'entrée (20) du dispositif de traitement de récolte (25), **caractérisée en ce que** le dispositif de réception d'auxiliaire de récolte (76) peut être pivoté par rapport au châssis de roulement (8) autour d'un axe vertical (102) par un actionneur de pivotement d'auxiliaire de récolte (104).

2. Moissonneuse (10) selon la revendication 1, **caractérisée en ce que** le dispositif de réception d'auxiliaire de récolte (76) est monté de manière à pouvoir pivoter par rapport au transporteur d'entrée (20) autour de l'axe vertical (102).

3. Moissonneuse (10) selon l'une quelconque des revendications précédentes, **caractérisée en ce que** le transporteur d'entrée (20) comprend un premier transporteur (56) et un deuxième transporteur (58) disposé en aval du premier transporteur (56).

4. Moissonneuse (10) selon la revendication 3, **caractérisée en ce que** le premier transporteur (56) est un rouleau ayant un axe de rotation (60) s'étendant horizontalement et transversalement à la direction de marche avant normale.

5. Moissonneuse (10) selon la revendication 3 ou 4, **caractérisée en ce que** le deuxième transporteur (58) est un transporteur à chaîne.

6. Moissonneuse (10) selon l'une quelconque des revendications précédentes, **caractérisée en ce qu'**il est prévu un soufflet (112) entre le dispositif de réception d'auxiliaire de récolte (76) et une paroi latérale (110) rigide en soi du transporteur d'entrée (20).

7. Moissonneuse (10) selon l'une quelconque des revendications précédentes, **caractérisée en ce que** le châssis de roulement (8) comprend une paire de moyens avant (12) se trouvant en prise avec le sol et de moyens arrière (14) se trouvant en prise avec le sol, lesquels sont disposés derrière les moyens avant (12) par rapport à la direction de marche avant normale (V) et peuvent être dirigés par un actionneur de direction (50), et **en ce que** l'actionneur de pivotement d'auxiliaire de récolte (104) peut être accouplé par entraînement avec l'actionneur de direction (50).

8. Moissonneuse (10) selon la revendication 7, **caractérisé en ce que** l'actionneur de direction (50) et l'actionneur de pivotement d'auxiliaire de récolte (104) sont connectés à un dispositif de commande (114), qui reçoit en tant que valeur d'entrée des signaux d'un dispositif d'entrée de commande (126) et/ou d'une antenne (132) connectée à une commande à distance sans fil et/ou d'une commande de direction automatique avec un capteur de position (130) et/ou un capteur des bords de la récolte.

9. Moissonneuse (10) selon l'une quelconque des revendications 7 ou 8, **caractérisée en ce que** l'accouplement entre l'actionneur de direction (50) et l'actionneur de pivotement d'auxiliaire de récolte (104) peut être coupé, notamment pour une conduite sur route.

10. Moissonneuse (10) selon l'une quelconque des revendications 7 à 9, **caractérisée en ce que** l'actionneur de direction (50) et l'actionneur de pivotement d'auxiliaire de récolte (104) peuvent être accouplés notamment de manière sélective, de telle sorte que le dispositif de réception d'auxiliaire de récolte (76) et les moyens arrière (14) en prise avec le sol soient déplacés en sens contraire ou dans le même sens.
